# EUROPEAN PATENT APPLICATION

(11) **EP 2 693 849 A1**
(43) Date of publication of application: **05.02.2014**
(21) Application number: 12763137.2
(22) Date of filing: 17.02.2012
(51) Int. Cl.: H05H 1/24, B01J 19/08, B08B 3/10, B26B 19/48, C01B 13/11, C02F 1/46, C02F 1/48, C02F 1/72, C02F 1/78

(54) **PLASMA GENERATOR AND CLEANING/PURIFICATION APPARATUS USING SAME**

(30) Priority: 28.03.2011 JP 2011069479
(71) Applicant: Panasonic Corporation, Osaka 571-8501 (JP)
(72) Inventor: NARITA, Kenji, Osaka-shi, Osaka 540-6207 (JP); SANEMATSU, Wataru, Osaka-shi, Osaka 540-6207 (JP); SAITOH, Akihiko, Osaka-shi, Osaka 540-6207 (JP); NAKAYAMA, Satoshi, Osaka-shi, Osaka 540-6207 (JP)
(74) Representative: Grünecker, Kinkeldey, Stockmair & Schwanhäusser
(86) International application number: PCT/JP2012/053766
(87) International publication number: WO 2012/132611

(57) **Abstract**

A plasma generator (1) comprises: a liquid containing part (3) which contains a liquid (6) including water; a gas containing part (4) which contains a gas; and a partition wall part (5) that separates the liquid containing part and the gas containing part from each other and is provided with a gas passage (5a) through which the gas in the gas containing part is led to the liquid containing part. The plasma generator (1) is also provided with a first electrode (10) that is arranged in the gas containing part and a second electrode (11) that is arranged so as to be in contact with the liquid in the liquid containing part. The plasma generator (1) is further provided with: a gas supply unit (9) which supplies the gas to the gas containing part; a plasma power supply unit (13); and a liquid inflow prevention device (a control unit (14)) which prevents the liquid from flowing into the gas containing part from the liquid containing part through the gas passage.

## Description

### TECHNICAL FIELD

The present invention relates to a plasma generator and a cleaning/purification apparatus using the same.

### BACKGROUND ART

As a conventional technique, an underwater electrical discharge device has been disclosed in Patent Literature 1. The underwater electrical discharge device performs electrical discharge in a liquid that contains bubbles, and thereby produces radicals and the like from the bubbles to modify the liquid.

### CITATION LIST

### PATENT LITERATURE

PTL 1: Japanese Patent Application Publication No. 2001-9463

### SUMMARY OF INVENTION

The above-mentioned underwater electrical discharge device needs to introduce a gas into the liquid in an electrical discharge container. During the introduction of the gas, however, part of the liquid leaks from a gas passage opened in the container in some cases. In these cases, if the liquid is left partially undrained after completion of the electrical discharge, impurities such as calcium may be deposited through evaporation of water from the liquid. The deposition of the impurities may clog the gas passage and hinder stable electrical discharge.

In view of the above, an object of the present invention is to prevent a liquid from flowing into a gas containing part from a liquid containing part, and thus to prevent an unstable electrical discharge phenomenon occurring due to clogging of a gas passage and adhesion of the liquid to an electrode provided in the gas containing part.

A plasma generator according to a first aspect of the present invention comprises: a liquid containing part configured to contain a liquid which includes water; a gas containing part configured to contain a gas; a partition wall part separating the liquid containing part and the gas containing part from each other and including a gas passage configured to lead the gas in the gas containing part to the liquid containing part; a first electrode arranged in the gas containing part; a second electrode arranged in contact with the liquid in the liquid containing part; a gas supply unit configured to supply the gas including oxygen to the gas containing part in a way that the gas in the gas containing part is transferred to the liquid containing part through the gas passage by pressure; a plasma power supply unit configured to turn the gas, which is transferred into the liquid in the liquid containing part by pressure, into plasma by causing electrical discharge between the first electrode and the second electrode through application of a predetermined voltage between the first electrode and the second electrode; and a liquid inflow prevention device configured to prevent the liquid from flowing into the gas containing part from the liquid containing part through the gas passage.

The liquid inflow prevention device may comprise a control unit configured to control a pressure of the gas to be supplied to an inside of the liquid containing part from the gas supply unit in order that a pressure in the gas passage becomes higher than a pressure in the liquid containing part.

The liquid inflow prevention device may further comprise a liquid detector configured to detect whether or not the liquid exists in the liquid containing part.

The control unit may perform control in order to make the gas supply unit work only if the liquid exists in the liquid containing part.

The liquid inflow prevention device may further comprise a lid detector configured to detect whether a lid openably and closably attached to the liquid containing part is opened or closed, and upon receipt of a lid-opened-state detection signal from the lid detector, the control unit performs the control in order to make the gas supply unit work.

In the liquid inflow prevention device, at least the gas passage may be formed from a waterproof and gas-permeable porous body.

In the liquid inflow prevention device, at least the gas passage may be a hydrophobic body.

The liquid inflow prevention device may be a hydrophobic coating layer formed at least on an inner surface of the gas passage.

The liquid inflow prevention device may be a check valve provided in the gas passage and configured to prevent the liquid from flowing into the gas containing part from the liquid containing part.

A cleaning/purification apparatus according to a second aspect of the present invention comprises the plasma generator as described above.

The plasma generator of the present invention includes the liquid inflow prevention device configured to prevent the liquid from flowing into the gas containing part from the liquid containing part through the gas passage. For this reason, if the liquid is about to flow from the liquid containing part into the gas containing part, the flow is blocked by the liquid inflow prevention device. Accordingly, no liquid remains in the gas passage after the completion of electrical discharge, and the gas passage is inhibited from being clogged with impurities such as calcium which would otherwise be deposited through water evaporation. In addition, since no liquid flows into the gas containing part through the gas passage, the liquid is less likely to be attached to the electrode provided in the gas containing part. For this reason, the plasma generator of the present invention is capable of obtaining stable electrical discharge.

Moreover, when the cleaning/purification apparatus is equipped with the foregoing plasma generator, the cleaning/purification apparatus can obtain stable plasma discharge, and can obtain radicals stably. This makes it possible to realize the cleaning/purification apparatus with higher cleaning effects.

### BRIEF DESCRIPTION OF DRAWINGS

[Fig. 1] Fig. 1 is a cross-sectional view schematically showing a plasma generator of a first embodiment.
[Fig. 2] Fig. 2 is a partially enlarged cross-sectional view schematically showing a condition for explaining how the plasma generator of the first embodiment works.
[Fig. 3] Fig. 3 is a partially enlarged cross-sectional view schematically showing a condition following the condition shown in Fig. 2.
[Fig. 4] Fig. 4 is a cross-sectional view schematically showing a plasma generator of a second embodiment.
[Fig. 5] Fig. 5 is a cross-sectional view schematically showing another example of the plasma generator of the second embodiment.
[Fig. 6] Fig. 6 is a cross-sectional view showing an example of how a liquid detector shown in Fig. 5 works.
[Fig. 7] Fig. 7 is a cross-sectional view schematically showing a plasma generator of a third embodiment.
[Fig. 8] Fig. 8 is a cross-sectional view schematically showing a plasma generator of a fourth embodiment.
[Fig. 9] Fig. 9 is a cross-sectional view schematically showing a plasma generator of a fifth embodiment.
[Fig. 10] Fig. 10 is a cross-sectional view schematically showing a plasma generator of a 6th embodiment.
[Fig. 11] Fig. 11 is a cross-sectional view schematically showing a plasma generator of a 7th embodiment.
[Fig. 12] Fig. 12 is a perspective view showing an example of how the plasma generator of one of the embodiments is applied to a cleaning/purification apparatus.
[Fig. 13] Fig. 13 is a cross-sectional view of the example shown in Fig. 12.
[Fig. 14] Fig. 14 is a cross-sectional view of the example taken along the A-A line of Fig. 13.

### DESCRIPTION OF EMBODIMENTS

Referring to the drawings, detailed descriptions will be hereinbelow provided for concrete embodiments to which the present invention is applied.

### [First Embodiment]

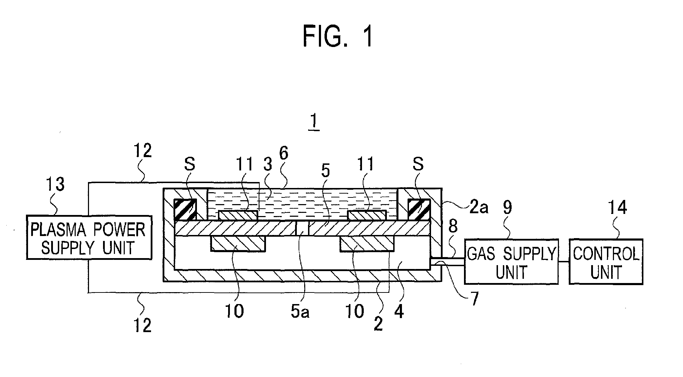

As shown in Fig. 1, a plasma generator 1 of a first embodiment includes a case member 2. The case member 2 is shaped like a cylinder or a square tube, for example. However, the shape of the case member 2 is not limited to the above. A partition wall part 5 configured to separate a liquid containing part 3 and a gas containing part 4 from each other is provided inside the case member 2. The internal space of the case member 2 is partitioned into upper and lower spaces by the partition wall part 5. In Fig. 1, the upper space is defined as the liquid containing part 3 and the lower space is defined as the gas containing part 4. A liquid 6 including water is contained in the liquid containing part 3. A gas including oxygen is contained in the gas containing part 4. Here, a ring-shaped sealing member S is installed between the case member 2 and the partition wall part 5. The sealing member S prevents the liquid 6 in the liquid containing part 3 from leaking from an interstice between the case member 2 and the partition wall part 5 into the gas containing part 4.

The partition wall part 5 is formed from a ceramic member, for example. The partition wall part 5 includes a gas passage 5a configured to guide the gas in the gas containing part 4 to the liquid containing part 3. The size of the gas passage 5a is set large enough for the gas to be sent into the liquid containing part 3 from the gas containing part 4. For this reason, the gas passage 5a should be as large in size as possible. If, however, the hole of the gas passage 5a is too large, the liquid 6 contained in the liquid containing part 3 flows into the gas containing part 4. To solve this problem, the plasma generator 1 of this embodiment includes a liquid inflow prevention device (liquid inflow prevention means), which will be described later.

A gas introduction port 7 making the gas containing part 4 communicate with the outside is provided in a sidewall 2a of the case member 2. A pipe (gas introduction passage) 8 is inserted in this gas introduction port 7. Thus, the gas containing part 4 is connected to a gas supply unit 9, which is provided outside the case member 2 through the pipe 8. In this embodiment, the gas including at least oxygen (O₂) is supplied to the inside of the gas containing part 4 from the gas supply unit 9. The gas supplied from the gas supply unit 9 is transferred into the liquid in the liquid containing part 3 through the gas passage 5a by pressure.

A first electrode 10 is arranged in the gas containing part 4. On the other hand, a second electrode 11 is arranged in the liquid containing part 3 while in contact with the liquid 6. The first electrode 10 and the second electrode 11 are configured to be respectively placed in the gas containing part 4 and the liquid containing part 3 with the partition wall part 5 interposed in between. In addition, the first electrode 10 and the second electrode 11 are each placed in contact with the partition wall part 5.

The first electrode 10 and the second electrode 11 are electrically connected to a plasma power supply unit 13 respectively through lead lines 12. The plasma power supply unit 13 is designed to apply a predetermined voltage between the first electrode 10 and the second electrode 11. This voltage application causes electrical discharge between the first electrode 10 and the second electrode 11. This electrical discharge turns the gas, which is transferred into the liquid in the liquid containing part 3 through the gas passage 5a by pressure, into plasma.

In the first embodiment, the liquid inflow prevention device is made from a control unit 14 configured to control the pressure of the gas to be supplied to the inside of the gas containing part 4 from the gas supply unit 9 so as to make the pressure in the gas passage 5a higher than the pressure in the liquid containing part 3. Previously, the control has been made by adjusting the size of the hole of the gas passage 5a in order to prevent the liquid 6 in the liquid containing part 3 from flowing into the gas containing part 4. In this regard, there were few options but to make the hole of the gas passage 5a small in size in order to suppress the inflow of the liquid 6. If the hole of the gas passage 5a is small in size, the liquid cannot be drained completely during a drain process after completion of plasma discharge and the liquid is partially left undrained and subjected to water evaporation. As a consequence, calcium or the like is deposited and the gas passage 5a is clogged. In contrast, the control unit 14 controls the pressure of the gas to be supplied to the inside of the gas containing part 4 from the gas supply unit 9 in such a way that the pressure in the gas passage 5a is higher than the pressure in the liquid containing part 3. Thus, it is possible to prevent the liquid 6 from flowing out into the gas containing part 4. This makes it possible to make the hole of the gas passage 5a larger than before, and the enlargement of the hole makes it possible to inhibit the clogging.

Next, descriptions will be provided for how the above-mentioned plasma generator 1 works, and for a method of producing hydroxyl radicals.

First of all, the gas including oxygen is supplied to the gas containing part 4 in a way that the gas in the gas containing part 4 is transferred to the liquid containing part 3 through the gas passage 5a by pressure (step of supplying a gas).

In this embodiment, the air-based gas including oxygen (with a flow rate of approximately 0.01 L/min to 1.0 L/min (10 cc/min to 1000 cc/min)) is sent into the gas containing part 4 from the gas supply unit 9 through the pipe 8. Here, the pressure for sending the gas in is controlled by the control unit 14 in a range of approximately 0.0098 MPa to 0.735 MPa (0.1 kgf/cm² to 7.5 kgf/cm²) under the above-mentioned condition.

As described above, the gas supply unit 9 has the function of supplying the gas (air) in the atmosphere. It should be noted that the flow rate for supplying the gas is controlled by a flow rate controller (not illustrated) provided to the gas supply unit 9. The gas supply unit 9 may include a function which enables the gas supply unit 9 to supply a different type of gas (for example, a gas with a different oxygen concentration) in addition to the gas in the atmosphere. Furthermore, the gas supply unit 9 may include a type-of-gas controller which enables the gas supply unit 9 to selectively supply one or more types of gases from various types of gases.

Once the gas is supplied to the gas containing part 4, the addition of this pressure to the atmospheric pressure raises the pressure in the gas containing part 4 to approximately 0.11 MPa to 0.835 MPa (1.1 kgf/cm² to 8.5 kgf/cm²), and the gas containing part 4 is thus put into a positive pressure state. This positive pressure in the gas containing part 4 forms the flow of the gas from the gas containing part 4 to the liquid containing part 3 through the gas passage 5a.

Furthermore, the supply of the gas including oxygen in the above-mentioned manner makes fine bubbles 16 including oxygen grow at an opening end 15 of the gas passage 5a near the liquid containing part 3 (step of growing bubbles).

Subsequently, the plasma power supply unit 13 applies a predetermined voltage between the first electrode 10 and the second electrode 11. Here, it is desirable that the applied voltage be a voltage (with power of approximately 10W to 100W) which enables glow discharge under the atmospheric pressure. In this respect, it is desirable that a voltage controller be provided to the plasma power supply unit 13 to control the voltage to be applied between the first electrode 10 and the second electrode 11.

Thereafter, the application of the predetermined voltage between the first electrode 10 and the second electrode 11 causes electrical discharge between the first electrode 10 and the second electrode 11 under the gas atmosphere whose pressure is equal to or higher than the atmospheric pressure. Incidentally, a technique for plasma generation under the atmospheric pressure has been reported in Document A (Okazaki, Sachiko, "Atmospheric Glow Discharge Plasma and Its Application," Review Speech at 20th JSPF Annual Meeting), for example.

Then, this electrical discharge generates plasma in the gaseous area in the liquid 6 in the liquid containing part 3, and thus produces ozone, hydroxyl radicals and the like from oxygen which is included in the water and gas included in the liquid 6 (step of producing hydroxyl radicals).

In the embodiment, the plasma is generated by causing a potential difference in the gas in the bubbles 16 (the gas near the gas-liquid interfaces in the liquid 6 in the liquid containing part 3). Since the potential difference is thus caused near the gas-liquid interfaces where hydroxyl radicals are easy to produce, it is possible to produce more ozone, hydroxyl radicals, and the like. It should be noted that this embodiment is capable of producing ozone, hydroxyl radicals and the like not only in the bubbles 16 near the opening end 15 of the gas passage 5a facing the liquid 6, but also in the bubbles 16 sent out to the liquid containing part 3.

The thus-produced ozone, hydroxyl radicals, etc. are sent out to the liquid containing part 3 in conjunction with the above-mentioned flow of the gas.

In the embodiment, the flow of the liquid 6 in the liquid containing part 3 detaches the bubbles 16 including hydroxyl radicals and the like from the partition wall part 5, and releases the thus-detached bubbles 16 into the liquid 6 (step of releasing the bubbles).

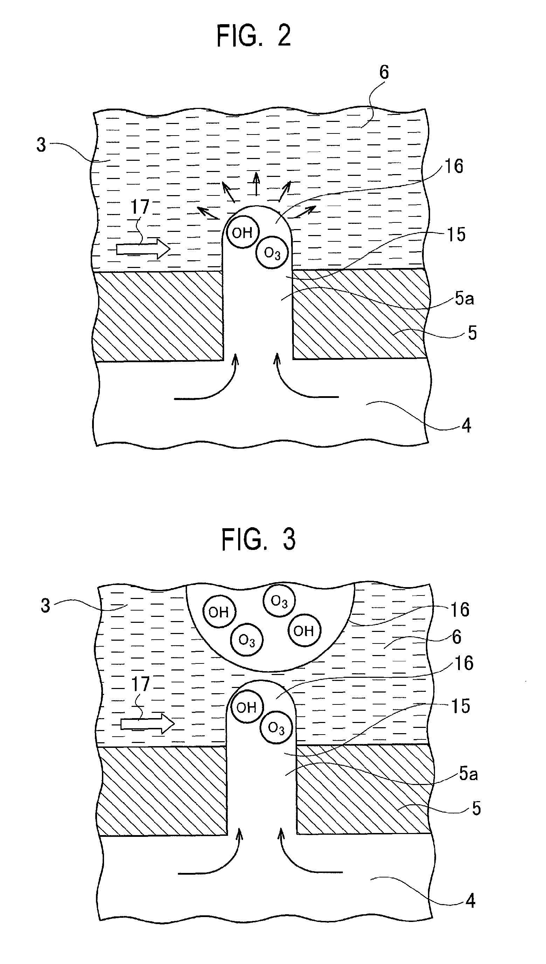

To put it specifically, the introduction of the liquid 6 causes the flow of the liquid 6 (see arrows 17 in Fig. 2 and Fig. 3) in the liquid containing part 3 where the bubbles 16 grow. As shown in Fig. 3, when the liquid 6 flowing in the direction indicated with the arrow 17 hits a growing bubble 16, the flow of the liquid 6 works as a detachment force, and the bubble 16 is thus set free into the liquid 6 from the opening end 15.

Since the bubbles 16 set free into the liquid 6 are fine bubbles, the bubbles 16 disperse throughout the liquid 6 without being directly released into the atmosphere. Parts of the dispersing fine bubbles 16 dissolve into the liquid 6. During this dissolution, ozone and the like included in the bubbles 16 dissolve into the liquid 6. Thus, the concentration of ozone in the liquid 6 rises quickly.

In addition, Document B (Masayoshi Takahashi, "Remediation of Water Environment by Microbubbles and Nanobubbles," Aqua Net, June 2004) has reported that, in general, the fine bubbles 16 including ozone and various radicals are usually negatively charged. Accordingly, parts of the bubbles 16 are attracted to organic matters, fats and oils, dyes, proteins, bacteria, and the like which are included in the liquid 6. The organic matters and the like in the liquid 6 are decomposed by ozone or various radicals which dissolve in the liquid 6, as well as ozone, various radicals or the like which are included in the bubbles 16 attracted to the organic matters and the like.

Hydroxyl radicals and the like have relatively large energy of approximately 120 kcal/mol, for example. This energy is larger than the binding energy (100 kcal/mol or less) of the double bond (N=N) between nitrogen atoms, the double bond (C=C) between carbon atoms, the double bond (C=N) between a carbon atom and a nitrogen atom, and the like. For this reason, the organic matters made by the bonds of nitrogen, carbon and the like are decomposed with their bonds easily broken by the hydroxyl radicals and the like. The ozone, hydroxyl radicals and the like which contribute to the decomposition of the organic matters and the like have no persistence unlike chlorine and the like, and disappear with a lapse of time. For this reason, the ozone, hydroxyl radicals and the like are also environment-friendly substances.

As described above, in the plasma generator 1 of the first embodiment, the first electrode 10 is arranged in the gas containing part 4 while the second electrode 11 is arranged in contact with the liquid 6 in the liquid containing part 3. In addition, the electrical discharge is caused between the first electrode 10 and the second electrode 11. Thereby, the plasma is generated in the gaseous area in the liquid 6 in the liquid containing part 3, and the hydroxyl radicals are produced from oxygen included in the water and gas which are included in the liquid 6.

This configuration makes it possible to cause the electrical discharge between the first electrode 10 and the second electrode 11 without being subjected to the influence of electric resistance of the liquid 6 so much. As a result, the gas can be securely turned into plasma, whereby ozone, radicals and the like can be more stably produced in large amounts. When the plasma generator 1 is used as a cleaning/purification apparatus, the electric resistance value of the liquid 6 fluctuates to a large extent because impurities and the like are included in the water in the liquid 6. The plasma generator 1 of the first embodiment, however, is capable of restricting the fluctuation in the electrical discharge since the plasma generator 1 is less subjected to the influence of the electric resistance of the liquid 6 for the above-described reason. Accordingly, the plasma generator 1 is capable of stably generating the plasma, and thereby stably obtaining the radicals and the like.

Furthermore, in the first embodiment, the control unit 14 as the liquid inflow prevention device controls the pressure for the supply from the gas supply unit 9 to the gas containing part 4 in order that the pressure in the gas passage 5a becomes higher than the pressure in the liquid containing part 3. When the pressure in the gas passage 5a is higher than the pressure of the liquid containing part 3 in this manner, the liquid 6 in the liquid containing part 3 does not flow into the gas containing part 4 through the gas passage 5a. As a result, since the liquid 6 does not flow into the gas containing part 4, the liquid 6 is not attached to the first electrode 10, whereby the stable electrical discharge can be obtained.

Moreover, in the first embodiment, since the liquid 6 does not flow into the gas containing part 4, the gas passage 5a is less likely to be clogged with calcium and the like which are deposited through drying after the liquid is drained. This makes it possible to make the gas passage 5a in a larger size, and accordingly to secure the amount of gas to be introduced. What is more, in the embodiment, the control unit 14 performs its control only in order that the pressure in the gas passage 5a becomes higher than the pressure in the liquid containing part 3. For this reason, the embodiment can simplify the device configuration without requiring new addition of dedicated components.

In addition, in the first embodiment, the introduction of the gas including oxygen into the gas containing part 4 makes the pressure in the gas containing part 4 positive, and forms the flow of the gas from the gas containing part 4 to the liquid containing part 3 through the gas passage 5a. The ozone, the hydroxyl radicals and the like are produced in the bubbles 16 which grow at the opening end 15 of the gas passage 5a facing the liquid 6 in conjunction with the flow of the gas. In addition, the pressure in the gas passage 5a is set higher than the pressure in the liquid containing part 3.

In other words, in the first embodiment, the ozone, the hydroxyl radicals and the like are produced in the gas in the bubbles 16 (the gas near the gas-liquid interfaces in the liquid 6 in the liquid containing part 3). In addition, the gas including the ozone, the hydroxyl radicals and the like is designed to be dispersed as the fine bubbles 16 throughout the liquid 6. Thereby, after the ozone and the various radicals are produced, the ozone and the various radicals can be sent into the liquid 6 efficiently in a very short length of time before the ozone and the various radicals disappear.

Thus, the fine bubbles 16 including the ozone and the various radicals disperse throughout the liquid 6. This dispersion increases the concentration of the ozone in the liquid 6, and the bubbles 16 are attracted to the organic matters and the like which are included in the liquid 6. Thereby, the organic matters, the bacteria and the like can be efficiently decomposed by the ozone which dissolves into the liquid 6, and the various radicals included in the attracted bubbles 16.

Besides, the plasma generator 1 of the first embodiment is capable of stably causing the electrical discharge, if the plasma power supply unit 13 includes the voltage control unit configured to control the voltage to be applied between the first electrode 10 and the second electrode 11. In other words, even if the electric resistance of the liquid 6 fluctuates, the stable electrical discharge can be obtained by changing the voltage in accordance with the fluctuation.

In addition, the plasma generator 1 of the first embodiment is capable of controlling the amount of ozone to be produced, the amount of hydroxyl radicals to be produced, and the like, if the gas supply unit 9 includes the type-of-gas controller configured to control the types of gases.

Furthermore, the plasma generator 1 of the first embodiment is capable of supplying the gas more simply and easily, if the gas supply unit 9 has the function of supplying the air in the atmosphere.

Moreover, the plasma generator 1 of the first embodiment is capable of generating the plasma more stably, if the flow rate for supplying the gas is controlled by the flow rate controller.

### [Second Embodiment]

A plasma generator 1 of a second embodiment includes a liquid detector (liquid detecting means) configured to detect whether or not a liquid 6 exists in a liquid containing part 3. The plasma generator 1 of the second embodiment is the same as the plasma generator 1 of the first embodiment, except for the liquid detector. For this reason, in this embodiment, components which are the same as those of the first embodiment will be denoted by the same reference signs, and descriptions for such components will be omitted.

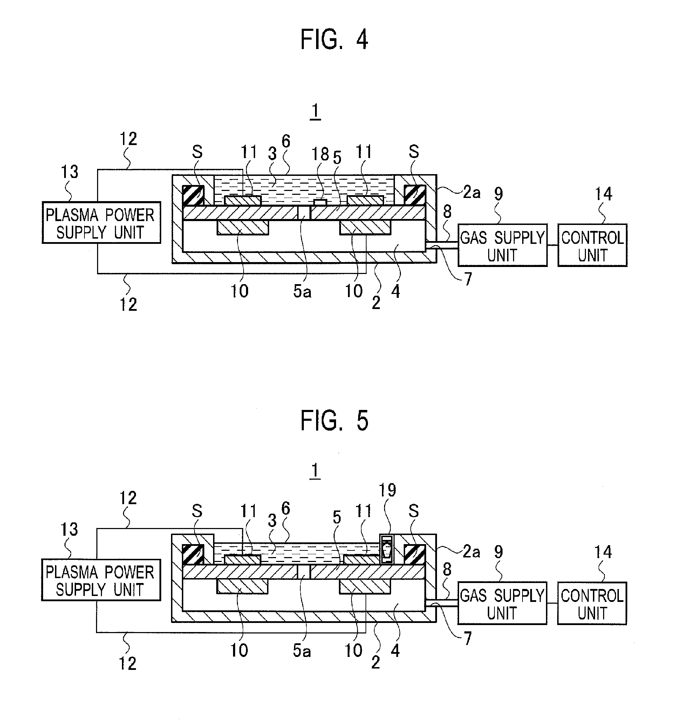

Fig. 4 shows the plasma generator 1 of the second embodiment. The liquid detector in Fig. 4 is a liquid detecting sensor 18 provided on the bottom portion of the liquid containing part 3. The liquid detecting sensor 18 is provided on a surface of a partition wall part 5 facing the liquid containing part 3, and detects whether or not the liquid 6 exists in the liquid containing part 3 optically or electrically, for example. If the liquid detecting sensor 18 detects that the liquid 6 exists in the liquid containing part 3, the control unit 14 makes the gas supply unit 9 work in order that the pressure in the gas passage 5a becomes higher than the pressure in the liquid containing part 3. If the liquid detecting sensor 18 detects that the liquid 6 does not exist in the liquid containing unit 3, the control unit 14 does not make the liquid supply unit 9 work in order that the pressure in the liquid passage 5a becomes higher than the pressure in the liquid containing part 3.

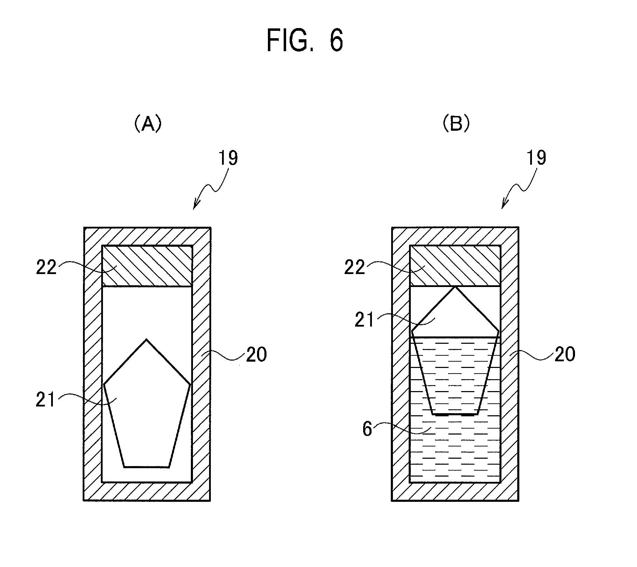

Fig. 5 shows another example of the plasma generator 1 of the second embodiment. A liquid detector shown in Fig. 5 is a mechanical liquid detecting switch which employs a float instead of using a sensor to detect the existence of the liquid 6. As shown in Fig. 6, the liquid detecting switch 19 is a mechanical switch including: a float 21 placed in a housing 20; a detection part 22 to be pushed upward by the liquid 6 to detect a state of contact. The housing 20 has a slit, a hole or the like through which the liquid 6 enters the inside of the housing 20.

As shown in Fig. 6(A), if the liquid 6 does not exist in the liquid containing part 3, the liquid 6 does not enter the inside of the housing 20. For this reason, the float 21 does not move upward. Accordingly, the detection part 22 is not in contact with the float 21. On the other hand, as shown in Fig. 6(B), if the liquid 6 exists in the liquid containing part 3, the liquid 6 enters the inside of the housing 20, and the float 21 comes into contact with the detection part 22. Once the detection part 22 detects the liquid 6, the control unit 14 makes the gas supply unit 9 work in order that the pressure in the gas passage 5a becomes higher than the pressure in the liquid containing part 3.

In the cases shown in Fig. 4 and Fig. 5, if the liquid 6 exists in the liquid containing part 3, the liquid detecting sensor 18 and the liquid detecting switch 19 detect the existence of the liquid 6, and the control unit 14 makes the gas supply unit 9 work in order that the pressure in the gas passage 5a becomes higher than the pressure in the liquid containing part 3. In other words, the control unit 14 performs control in order to make the gas supply unit 9 work only if the liquid 6 exists in the liquid containing part 3.

The plasma generator 1 of the second embodiment is capable of efficiently and safely preventing the liquid 6 from flowing into the gas containing part 4 while preventing an increase in power consumption if: it is detected by the liquid detector whether or not the liquid 6 exists in the liquid containing part 3; and the control is performed to make the gas supply unit 9 work.

Furthermore, the plasma generator 1 of the second embodiment is capable of efficiently and safely preventing the liquid 6 from flowing into the gas containing part 4, since the control unit 14 makes the pressure in the gas passage 5a higher than the pressure in the liquid containing part 3 only if the liquid 6 exists in the liquid containing part 3.

In Fig. 4 to Fig. 6, the liquid detector detects the existence of the liquid 6. Instead, the existence of the liquid 6 may be detected visually. When the existence of the liquid 6 is visually detected, the control is performed by the control unit 14 to make the gas supply unit 9 work in order that the pressure in the gas passage 5a becomes higher than the pressure in the liquid containing part 3.

### [Third Embodiment]

A plasma generator 1 of a third embodiment includes the configuration of the plasma generator 1 of the first embodiment, in which the liquid inflow prevention device (liquid inflow prevention means) is further provided with a lid detector (lid opening/closing detection means) configured to detect whether a lid openably and closably attached to the liquid containing part 3 is opened or closed. In addition, the control unit 14 is designed to perform control to make the gas supply unit 9 work by receiving a lid-opened-state detection signal from the lid detector. The plasma generator 1 of the third embodiment is the same as the plasma generator 1 of the first embodiment, except for the above-mentioned configuration. For this reason, in this embodiment, components which are the same as those of the first embodiment will be denoted by the same reference signs, and descriptions for such components will be omitted.

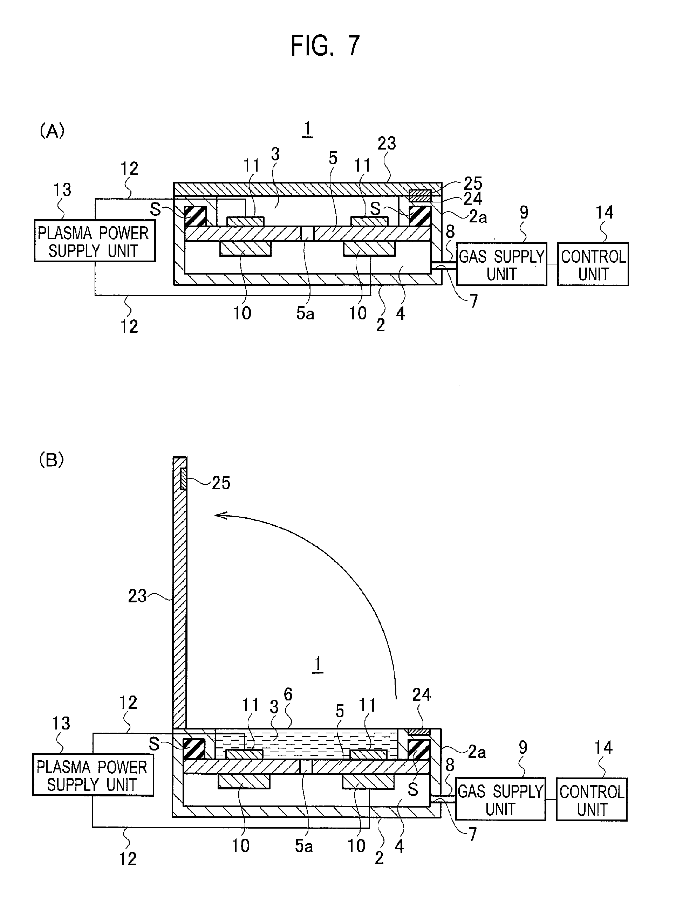

Fig. 7 shows the plasma generator 1 of the third embodiment. A lid 23 is openably and closably attached to a liquid containing part 3 of the plasma generator 1. The lid 23 is provided on an opening side of the liquid containing part 3. The lid 23 can be closed in a closed state shown in Fig. 7(A) and can be opened in an opened state shown in Fig. 7(B). The lid detector includes: a sensor part 24 provided on an upper surface of an opening peripheral portion of the liquid containing part 3; and a contact point 25 provided to the lid 23. As shown in Fig. 7(A), while the lid 23 is closed, the contact point 25 is in contact with the sensor part 24. As shown in Fig. 7(B), while the lid 23 is opened, the contact point 25 is away from, and not in contact with, the sensor part 24.

In the plasma generator 1 of the third embodiment, the control unit 14 makes the gas supply unit 9 work in order that the pressure in the gas passage 5a becomes higher than the pressure in the liquid containing part 3 when the control unit 14 receives the lid-opened-state detection signal from the lid detector, that is to say, when the contact point 25 is detached from the sensor part 24. For example, when the plasma generator 1 is applied to the cleaning/purification apparatus, the apparatus detects the lid-opened-state detection signal in response to an action of opening the lid 23 for setting an object to be cleaned in a cleaner, and makes the pressure in the gas passage 5a higher than the pressure in the liquid opening part 3. In this way, it is possible to automatically make the pressure in the gas passage 5a higher than the pressure in the liquid containing part 3 when the cleaning is performed. When the cleaning is not performed, the lid 23 is closed and no lid-opened-state detection signal is obtained. Hence, the gas supply unit 9 does not work.

In addition, the plasma generator 1 of the third embodiment is capable of preventing the liquid 6 from being put into the containing part 3 by mistake since the lid 23 is openably and closably attached in such a way as to cover the liquid containing part 3.

### [Fourth Embodiment]

The gas passage 5a of the plasma generator 1 of the first embodiment is a simple hole. In a plasma generator 1 of a fourth embodiment, a gas passage 5a is formed from a waterproof and gas-permeable porous body. The plasma generator 1 of the fourth embodiment is the same as the plasma generator 1 of the first embodiment, except for the above-mentioned configuration. For this reason, in this embodiment, components which are the same as those of the first embodiment will be denoted by the same reference signs, and descriptions for such components will be omitted.

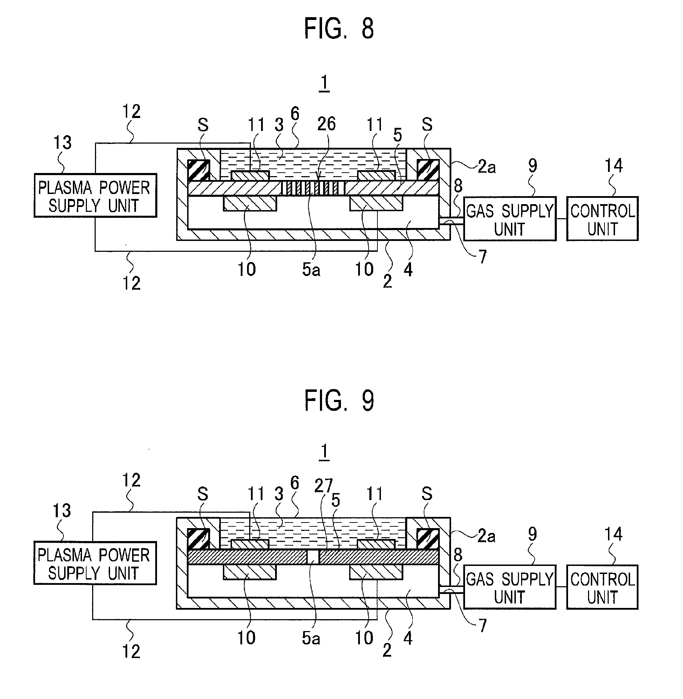

Fig. 8 shows the plasma generator 1 of the fourth embodiment. A porous body 26 of the plasma generator 1 forms the gas passage 5a from a porous material allowing the gas to pass through from a gas containing part 4 to a liquid containing part 3, but not allowing a liquid 6 to flow into the gas containing part 4 from the liquid containing part 3. Poreflon (registered trademark) produced by Sumitomo Electric Fine Polymer, Inc., for example, may be used for the porous body 26.

Although in Fig. 8, part of a partition wall part 5 is formed from the porous body 26, the entirety of the partition wall part 5 may be formed from the porous body 26.

In the plasma generator 1 of the fourth embodiment, the gas passage 5a itself is capable of preventing the liquid 6 from flowing into the gas containing part 4 from the liquid containing part 3 since the gas passage 5a is formed from the porous body 26. This makes it possible to inhibit the attachment of the liquid 6 to a first electrode 10 which is provided in the gas containing part 4, and accordingly to cause stable plasma discharge.

Furthermore, in the plasma generator 1 of the fourth embodiment, a control unit 14 may perform control in order to make the pressure in the gas passage 5a higher than the pressure in the liquid containing part 3. Since, however, the plasma generator 1 includes the porous body 26, the plasma generator 1 is capable of preventing the inflow of the liquid 6 even if the control unit 14 does not perform the control. In this case, the inflow of the liquid 6 into the gas containing part 4 can be prevented without depending on the pressure of the gas. Accordingly, even if the supply of the gas is discontinued for some reason, the inflow of the liquid 6 into the gas containing part 4 can be prevented by the porous body 26. It should be noted that in a case where the pressure of the gas is not adjusted, the porous body 26 functions as the liquid inflow prevention device (liquid inflow prevention means).

### [Fifth Embodiment]

In a plasma generator 1 of a fifth embodiment, the gas passage 5a of the plasma generator 1 of the first embodiment is formed from a hydrophobic body. The plasma generator 1 of the fifth embodiment is the same as the plasma generator 1 of the first embodiment, except for the above-mentioned configuration. For this reason, components which are the same as those of the first embodiment will be denoted by the same reference signs, and descriptions for such components will be omitted.

Fig. 9 shows the plasma generator 1 of the fifth embodiment. A hydrophobic body 27 of the plasma generator 1 forms a gas passage 5a from a hydrophobic material allowing a gas to pass through from a gas containing part 4 to a liquid containing part 3, but not allowing a liquid 6 to flow into the gas containing part 4 from the liquid containing part 3. Here, the hydrophobic body 27 only needs to be provided in an area that forms the gas passage 5a. Nonetheless, the hydrophobic body 27 may form the entirety of a partition wall part 5. In the fifth embodiment, the entirety of the partition wall part 5 is formed from the hydrophobic body 27.

The hydrophobic body 27 is made from, for example, PTFE (polytetrafluoroethylene), a fluororesin, a fluorine-containing aqueous coating material (Fluoro Surf produced by Fluoro Technology) or the like. Otherwise, the hydrophobic body 27 is made from silyl ether, a substance containing an alkylsilyl group, or the like. Furthermore, saturated fluoroalkyl groups (particularly, a trifluoromethyl group (CF3-), alkylsilyl groups, fluorosilyl groups, long-chain alkyl groups and the like may be used for the hydrophobic body 27.

In the plasma generator 1 of the fifth embodiment, the gas passage 5a repels the liquid 6 since the partition wall part 5 is formed from the hydrophobic body 27. The gas passage 5a itself is capable of preventing the liquid 6 from flowing into the gas containing part 4 from the liquid containing part 3. This makes it possible to inhibit the attachment of the liquid 6 to a first electrode 10 which is provided in the gas containing part 4, and accordingly to cause stable plasma discharge.

Furthermore, in the plasma generator 1 of the fifth embodiment, a gas supply part 9 may be controlled by the control unit 14 in order that the pressure in the gas passage 5a becomes higher than the pressure in the liquid containing part 3. Since, however, the plasma generator 1 includes the hydrophobic body 27, the plasma generator 1 is capable of preventing the inflow of the liquid 6 without performing the control. In this case, the inflow of the liquid 6 into the gas containing part 4 can be prevented without depending on the pressure of the gas. Accordingly, even if the supply of the gas is discontinued for some reason, the inflow of the liquid 6 into the gas containing part 4 can be prevented by the hydrophobic body 27. It should be noted that, when the pressure of the gas is not adjusted, the hydrophobic body 27 functions as the liquid inflow prevention device (liquid inflow prevention means).

### [6th Embodiment]

In a plasma generator 1 of a 6th embodiment, an inner surface of the gas passage 5a of the plasma generator 1 of the first embodiment is formed from a hydrophobic coating layer. The plasma generator 1 of the 6th embodiment is the same as the plasma generator 1 of the first embodiment, except for the above-mentioned configuration. For this reason, components which are the same as those of the first embodiment will be denoted by the same reference signs, and descriptions for such components will be omitted.

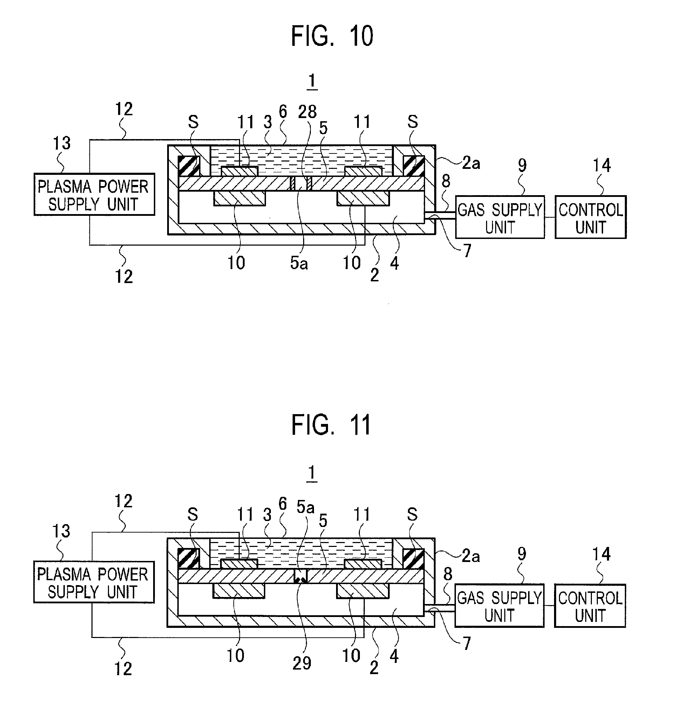

Fig. 10 shows the plasma generator 1 of the 6th embodiment. A hydrophobic coating layer 28 of the plasma generator 1 forms the inner surface of the gas passage 5a from a hydrophobic material. The hydrophobic coating layer 28 is a coating layer obtained by applying the hydrophobic material, which is the same as that of the hydrophobic body of the fifth embodiment, to the inner surface of the gas passage 5a.

In the plasma generator 1 of the 6th embodiment, the gas passage 5a repels the liquid 6, since the inner surface of the gas passage 5a is formed from the hydrophobic coating layer 28. The gas passage 5a itself is capable of preventing the liquid 6 from flowing into the gas containing part 4 from the liquid containing part 3. This makes it possible to inhibit the attachment of the liquid 6 to a first electrode 10 which is provided in the gas containing part 4, and accordingly to cause stable plasma discharge.

Furthermore, in the plasma generator 1 of the 6th embodiment, the control unit 14 may perform control in order that the pressure in the gas passage 5a becomes higher than the pressure in the liquid containing part 3. Since, however, the plasma generator 1 includes the hydrophobic coating layer 28, the inflow of the liquid 6 can be prevented without performing the control. In this case, the inflow of the liquid 6 into the gas containing part 4 can be prevented without depending on the pressure of the gas. Accordingly, even if the supply of the gas is discontinued for some reason, the inflow of the liquid 6 into the gas containing part 4 can be prevented by the hydrophobic coating layer 28. It should be noted that, when the pressure of the gas is not adjusted, the hydrophobic coating layer 28 functions as the liquid inflow prevention device (liquid inflow prevention means).

### [7th Embodiment]

A plasma generator 1 of a 7th embodiment has the configuration of the plasma generator 1 of the first embodiment, in which a check valve 29 is provided in the gas passage 5a. The plasma generator 1 of the 7th embodiment is the same as the plasma generator 1 of the first embodiment, except for the above-mentioned configuration. For this reason, components which are the same as those of the first embodiment will be denoted by the same reference sings, and descriptions for such components will be omitted.

Fig. 11 shows the plasma generator 1 of the 7th embodiment. The check valve 29 of the plasma generator 1 allows the gas to pass through from a gas containing part 4 to a liquid containing part 3, but prevents a liquid 6 from flowing into the gas containing part 4 from the liquid containing part 3.

In the plasma generator 1 of the 7th embodiment, the gas passage 5a itself is capable of preventing the liquid 6 from flowing into the gas containing part 4 from the liquid containing part 3 since the check valve 29 is provided in the gas passage 5a. This makes it possible to inhibit the attachment of the liquid 6 to a first electrode 10 which is provided in the gas containing part 4, and accordingly to cause stable plasma discharge.

Furthermore, in the plasma generator 1 of the 7th embodiment, a gas supply part 9 may be controlled by the control unit 14 in order that the pressure in the gas passage 5a becomes higher than the pressure in the liquid containing part 3. Since, however, the plasma generator 1 includes the check valve 29, the plasma generator 1 is capable of preventing the inflow of the liquid 6 without performing the control. In this case, the inflow of the liquid 6 into the gas containing part 4 can be prevented without depending on the pressure of the gas. Accordingly, even if the supply of the gas is discontinued for some reason, the inflow of the liquid 6 into the gas containing part 4 can be prevented by the check valve 29. It should be noted that, when the pressure of the gas is not adjusted, the check valve 29 functions as the liquid inflow prevention device (liquid inflow prevention means).

### [8th Embodiment]

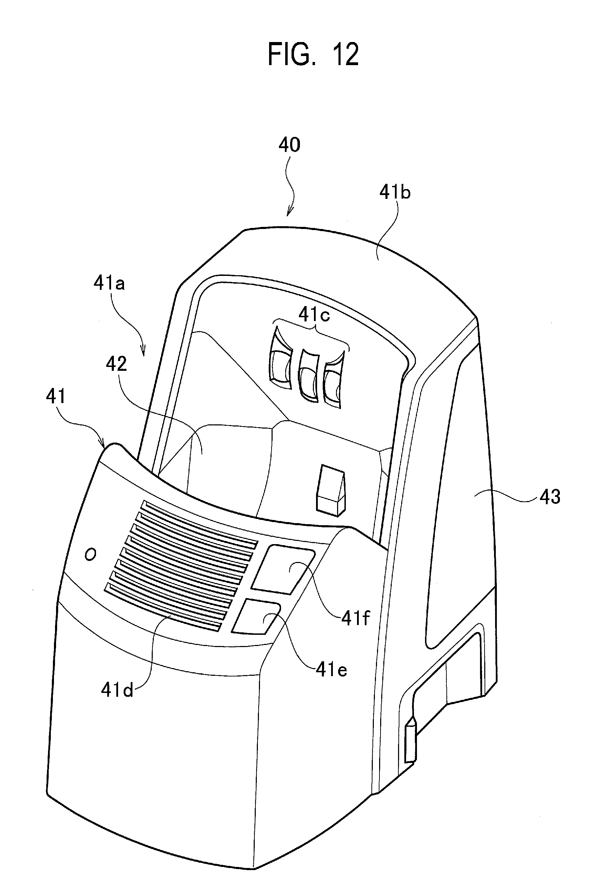

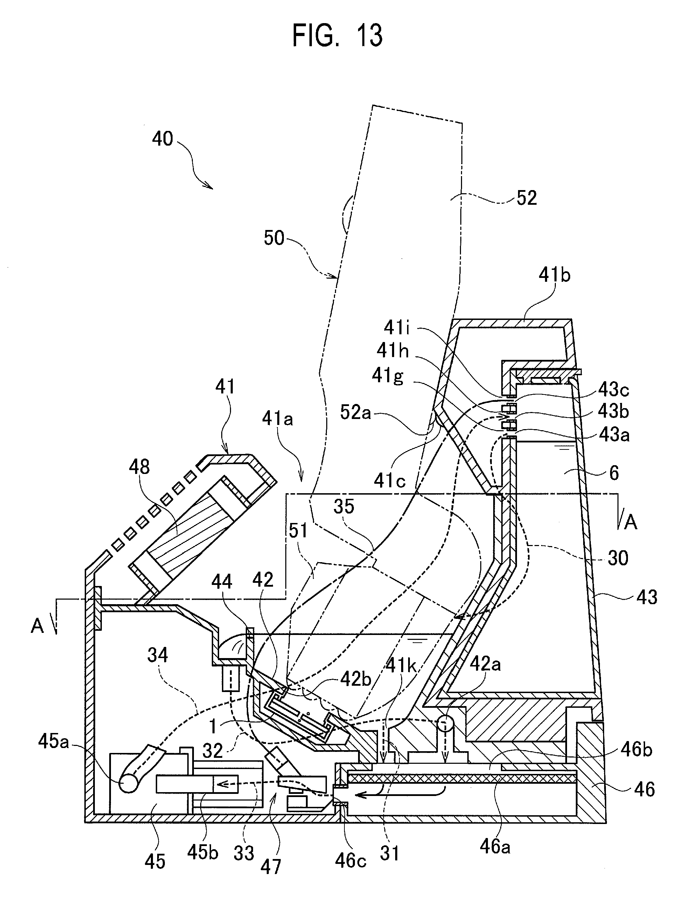

As for an 8th embodiment, descriptions will be provided for an example of a small-sized electrical appliance using the plasma generator 1 of the present invention by referring to Fig. 12 to Fig. 14. A cleaning/purification apparatus configured to clean a head unit of an electric shaver (a small-sized shaving tool) is shown as an example of the small-sized electrical appliance.

A cleaning/purification apparatus 40 is configured to clean the head unit (an object to undergo a cleaning process) 51 of an electric shaver 50 which is a type of a shaving tool.

As shown in Fig. 12 to Fig. 14, the cleaning/purification apparatus 40 includes a housing 41 having an opening 41 a through which to insert the electric shaver 50 with the head unit 51 upended, and a receptacle 42 configured to receive the head unit 51 which is inserted into the housing 42 through the opening 41a.

The cleaning/purification apparatus 40 further includes: a tank 43 configured to hold the liquid 6; an overflow part 44 communicating with the receptacle 42; and a pump 45 configured to circulate and supply the liquid 6 in the tank 43 to an liquid introduction port. The cleaning/purification apparatus 40 yet further includes: a cartridge 46 having a filter 46a configured to filter the liquid; an on-off valve 47 configured to control the airtight state in the tank 43; and a circulation passage configured to circulate the liquid 6.

The circulation passage includes: a pipe (liquid introduction passage) 30 configured to introduce the liquid 6, which is held in the tank 43, to the receptacle 42; and a passage 31 (a discharge passage) configured to lead the liquid, which is discharged from the receptacle 42, to the cartridge 46. The circulation passage further includes: a passage 32 configured to lead the liquid 6, which is discharged from the overflow part 44, to the cartridge 46; and a passage 33 configured to lead the liquid 6, which is discharged from the cartridge 46, to the pump 45. The circulation passage yet further includes a passage 34 configured to lead the liquid 6, which is sent out of the pump 45, to the tank 43. In addition, the on-off valve 47 is connected to the tank 43 through an airtight passage 35. Descriptions will be hereinbelow provided for each of the components.

The housing 41 has a stand part 41b located in its rear potion and designed to come into contact with a grip part 52 of the electric shaver 50. The housing 41 holds the electric shaver 50, which is inserted through the opening 41a, in the receptacle 42. As shown in Fig. 12, contact members 41c configured to detect the mounting of the electric shaver 50 in the cleaning/purification apparatus 40 are provided in the front surface of the stand part 41b. The contact members 41c detect the mounting of the electric shaver 50 when the contact members 41c come into contact with terminals 52a provided on the rear surface of the grip part 52. In addition to the detection function, the contact members 41c are provided with functions to output various control signals and driving electric power.

A fan 48 configured to dry the head unit 51 after cleaning is housed in the front upper portion of the housing 41. Fan air slits 41d, a manipulation button 41e used for executing a cleaning operation, a lamp 41f configured to display the operational status, and the like are provided on the front surface of the housing 41. The rear-surface side of the housing 41 is formed into a mounting part to mount the tank 43, and is provided with connecting openings 41g, 41h, 41i which are connected to the respective openings 43a, 43b, 43c of the tank 43. The connecting opening 41g is connected to the pipe 30; the connecting opening 41h is connected to the passage 34; and the connecting opening 41i is connected to the airtight passage 35.

The receptacle 42 is formed into a recessed shape coinciding with the shape of the head unit 51. A through-hole 42b is formed in the bottom wall portion of the receptacle 42. The plasma generator 1 is provided behind the bottom wall portion of the receptacle 42 in a way that the liquid containing part 3 communicates with the inner space of the receptacle 42 through the through-hole 42b.

In this example, the plasma generator 1 is provided in a way that the liquid containing part 3 communicates with the inner space of the receptacle 42, and the inner space of the receptacle 42 likewise functions as the liquid containing part 3 of the plasma generator 1. Here, it is desirable that a drain groove or the like, for example, be formed in the receptacle 42 so as to smoothly discharge the liquid 6 in the liquid containing part 3 through the passage 31 (the discharge passage).

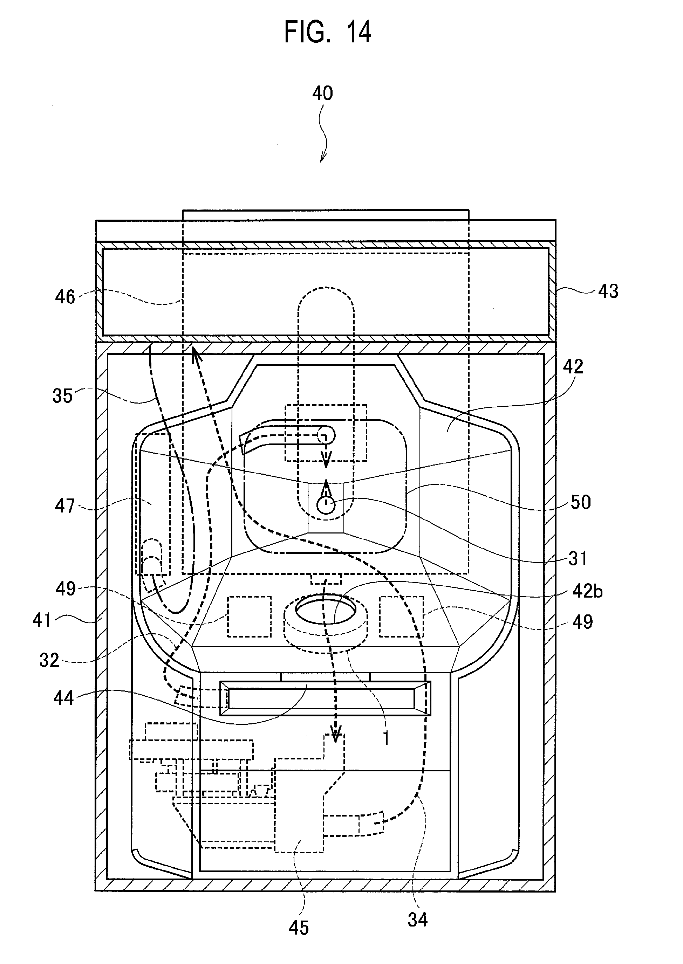

A heater 49 is provided behind the bottom-portion wall of the receptacle 42 (see Fig. 14). The heater 49 dries the head unit 51 in cooperation with the fan 48.

The overflow part 44 is provided in front of the receptacle 42. The receptacle 42 and the overflow part 44 are formed integrally. An inlet of the overflow part 44 is connected to the receptacle 42 and an outlet thereof is connected to the passage 32. The passage 32 extends from the outlet of the overflow part 44 to the cartridge 46 via a relay opening 42a provided behind the receptacle 42.

The discharge opening 43a, the inflow opening 43b, and the air opening 43c configured to release the airtight state are provided in the front surface of the tank 43. The discharge of the liquid through the discharge opening 43a is controlled by the opening and closing of the air opening 43c. The tank 43 is detachably attached to the rear-surface side of the housing 41. In addition, while the tank 43 is attached to the housing 41, the discharge opening 43a is connected to the connecting opening 41g so that the liquid stored in the tank 43 can be introduced into the receptacle 42 through the pipe (liquid introduction passage) 30. In addition, the inflow opening 43b is connected to the connecting opening 41h, and is thus connected to a delivery opening 45a of the pump 45 through the passage 34. The air opening 43c is connected to the connecting opening 41i, and is thus connected to the on-off valve 47 through the airtight passage 35.

The cartridge 46 is a substantially box-shaped body that houses the filter 46a inside. The cartridge 46 has an inflow opening 46b in its upper portion, and has an outflow opening 46c on its front portion. The cartridge 46 is detachably provided in the lower rear portion of the housing 41. While the cartridge 46 is attached to the housing 41, the inflow opening 46b is connected to a discharge opening 41k through the passage 31 (the discharge passage). In addition, the inflow opening 46b is connected to the outlet of the overflow part 44 through the passage 32. Furthermore, the outflow opening 46c is connected to a suction opening 45c of the pump 45 through the passage 33.

Next, descriptions will be provided for how the cleaning/purification apparatus 40 works. First of all, the liquid 6 is introduced into the receptacle 42 and the liquid containing part 3 of the plasma generator 1 from the tank 43 through the pipe (liquid introduction passage) 30.

Subsequently, the air-based gas including oxygen at the predetermined flow rate is delivered into the gas containing part 4 from the gas supply unit 9 through the pipe 8. In a case where the plasma generator 1 of the first embodiment is used, the control unit 14 controls the gas supply unit 9, and thus makes the pressure in the gas passage 5a higher than the pressure in the liquid containing part 3. Thereby, the gas containing part 4 is put into the positive pressure state, and the flow of the gas is created in the direction from the gas containing part 4 to the liquid containing part 3 through the gas passage 5a.

Thereafter, the predetermined voltage is applied between the first electrode 10 and the second electrode 11, and the electrical discharge is thereby caused between the first electrode 10 and the second electrode 11. This electrical discharge generates plasma in the gaseous area in the liquid 6 in the liquid containing part 3, and the ozone, the hydroxyl radicals, and the like are produced from the oxygen included in the water and the gas included in the liquid 6.

Then, the ozone and the various radicals thus produced are delivered into the liquid stored in the liquid containing part 3 and the receptacle 42 in conjunction with the flow of the gas. Here, the growing bubbles are set free form the opening end 15 into the liquid as the bubbles 16 that are made fine by micronization means, and the fine bubbles 16 set free into the liquid disperse throughout the liquid. In other words, the produced cleaning liquid is supplied to the head unit 51. Then, the ozone and the radicals which dissolve in the liquid 6, as well as the ozone and the radicals included in the bubbles 16, decompose organic matters and the like which are attached to the head unit 51.

It should be noted that, although the cleaning/purification apparatus 40 of the 8th embodiment includes the plasma generator 1 of the first embodiment, the same effect can be obtained by using the plasma generator 1 of any one of the second to 7th embodiments. In other words, the cleaning/purification apparatus 40 using the plasma generator 1 of the present invention is capable of stably obtaining the radicals while keeping the stable electrical discharge state, and is accordingly capable of obtaining a high cleaning effect.

Although the foregoing descriptions have been provided for the preferable embodiments of the present invention, the present invention is not limited to the above-described embodiments and various modifications are possible.

For example, although in the above-described embodiments, the ceramic member is shown as an example of the partition wall part 5 provided with the gas passage 5a therein, the material of the partition wall part 5 is not limited to the ceramic member. For example, a material such a glass plate may be used to partition the gas and the liquid from each other with a fine hole (the gas passage 5a) formed in the material by photoengraving and etching. In this case, multiple gas passages 5a may be provided therein.

In addition, the cleaning/purification apparatus 40 of the present invention is not limited to what has been shown in the 8th embodiment. For example, the cleaning/purification apparatus 40 may be applied to a cleaning/purification apparatus for an electric toothbrush, a water-purification apparatus, an apparatus configured to purify water including a detergent and the like before its drainage, and the like.

Furthermore, detailed specifications (shape, size, layout and the like) of the liquid containing part 3, the gas containing part 4 and the others may be changed as needed.

The entire contents of Japanese Patent Application No. 2011-069479 (filed on March 28, 2011) are incorporated herein by reference.

Although the contents of the present invention have been described above with reference to the embodiments, the present invention is not limited to those descriptions. It is obvious to those skilled in the art that various modifications and improvements are possible.

### INDUSTRIAL APPLICABILITY

A plasma generator of the present invention includes a liquid inflow prevention device. The liquid inflow prevention device prevents a liquid from flowing into a gas containing part from a liquid containing part through a gas passage. For this reason, the liquid does not remain in the gas passage after completion of electrical discharge, and deposition of impurities such as calcium through water evaporation is inhibited. Since the deposition of the impurities is inhibited, clogging of the gas passage with residual impurities is likewise inhibited. Since no liquid flows into the gas containing part through the gas passage, the liquid is less likely to be attached to an electrode provided in the gas containing part. Accordingly, the plasma generator of the present invention is capable of achieving stable electrical discharge.

## Claims

1. A plasma generator comprising:
a liquid containing part configured to contain a liquid which includes water;
a gas containing part configured to contain a gas;
a partition wall part separating the liquid containing part and the gas containing part from each other and including a gas passage configured to lead the gas in the gas containing part to the liquid containing part;
a first electrode arranged in the gas containing part;
a second electrode arranged in contact with the liquid in the liquid containing part;
a gas supply unit configured to supply the gas including oxygen to the gas containing part in a way that the gas in the gas containing part is transferred to the liquid containing part through the gas passage by pressure;
a plasma power supply unit configured to turn the gas, which is transferred into the liquid in the liquid containing part by pressure, into plasma by causing electrical discharge between the first electrode and the second electrode through application of a predetermined voltage between the first electrode and the second electrode; and
a liquid inflow prevention device configured to prevent the liquid from flowing into the gas containing part from the liquid containing part through the gas passage.

2. The plasma generator of claim 1, wherein the liquid inflow prevention device comprises a control unit configured to control a pressure of the gas to be supplied to an inside of the liquid containing part from the gas supply unit in order that a pressure in the gas passage becomes higher than a pressure in the liquid containing part.

3. The plasma generator of claim 2, wherein the liquid inflow prevention device further comprises a liquid detector configured to detect whether or not the liquid exists in the liquid containing part.

4. The plasma generator of claim 2 or claim 3, wherein the control unit performs control in order to make the gas supply unit work only if the liquid exists in the liquid containing part.

5. The plasma generator of claim 2, wherein
the liquid inflow prevention device further comprises a lid detector configured to detect whether a lid openably and closably attached to the liquid containing part is opened or closed, and
upon receipt of a lid-opened-state detection signal from the lid detector, the control unit performs the control in order to make the gas supply unit work.

6. The plasma generator of any one of claims 1 to 5, wherein in the liquid inflow prevention device, at least the gas passage is formed from a waterproof and gas-permeable porous body.

7. The plasma generator of any one of claims 1 to 5, wherein in the liquid inflow prevention device, at least the gas passage is a hydrophobic body.

8. The plasma generator of any one of claims 1 to 5, wherein the liquid inflow prevention device is a hydrophobic coating layer formed at least on an inner surface of the gas passage.

9. The plasma generator of any one of claims 1 to 5, wherein the liquid inflow prevention device is a check valve provided in the gas passage and configured to prevent the liquid from flowing into the gas containing part from the liquid containing part.

10. A cleaning/purification apparatus comprising the plasma generator of any one of claims 1 to 9.

## Amended claims

### Amended claims under Art. 19.1 PCT

**1.** Amended) A plasma generator comprising:
a liquid containing part configured to contain a liquid which includes water;
a gas containing part configured to contain a gas;
a partition wall part separating the liquid containing part and the gas containing part from each other and including a gas passage configured to lead the gas in the gas containing part to the liquid containing part;
a first electrode arranged in the gas containing part;
a second electrode arranged in contact with the liquid in the liquid containing part;
a gas supply unit configured to supply the gas including oxygen to the gas containing part in a way that the gas in the gas containing part is transferred to the liquid containing part through the gas passage by pressure;
a plasma power supply unit configured to turn the gas, which is transferred into the liquid in the liquid containing part by pressure, into plasma by causing electrical discharge between the first electrode and the second electrode through application of a predetermined voltage between the first electrode and the second electrode; and
a liquid inflow prevention device configured to prevent the liquid from flowing into the gas containing part from the liquid containing part through the gas passage,
wherein the liquid inflow prevention device comprises a control unit configured to control a pressure of the gas to be supplied to an inside of the liquid containing part from the gas supply unit in order that a pressure in the gas passage becomes higher than a pressure in the liquid containing part, and
wherein the control unit performs control in order to make the gas supply unit work only if the liquid exists in the liquid containing part.

**2.** (Canceled)

**3.** (Amended) The plasma generator of claim 1, wherein the liquid inflow prevention device further comprises a liquid detector configured to detect whether or not the liquid exists in the liquid containing part.

**4.** (Canceled)

**5.** (Amended) The plasma generator of claim 1, wherein
the liquid inflow prevention device further comprises a lid detector configured to detect whether a lid openably and closably attached to the liquid containing part is opened or closed, and
upon receipt of a lid-opened-state detection signal from the lid detector, the control unit performs the control in order to make the gas supply unit work.

**6.** (Amended) The plasma generator of any one of claims 1, 3 and 5, wherein in the liquid inflow prevention device, at least the gas passage is formed from a waterproof and gas-permeable porous body.

**7.** (Amended) The plasma generator of any one of claims 1, 3 and 5, wherein in the liquid inflow prevention device, at least the gas passage is a hydrophobic body.

**8.** (Amended) The plasma generator of any one of claims 1, 3 and 5, wherein the liquid inflow prevention device is a hydrophobic coating layer formed at least on an inner surface of the gas passage.

**9.** (Amended) The plasma generator of any one of claims 1, 3 any 5, wherein the liquid inflow prevention device is a check valve provided in the gas passage and configured to prevent the liquid from flowing into the gas containing part from the liquid containing part.

**10.** (Amended) A cleaning/purification apparatus comprising the plasma generator of any one of claims 1, 3 and 5 to 9.
